# FASCICULE DE BREVET EUROPEEN

(11) **EP 2 677 856 B1**
(45) Date de publication et mention de la délivrance du brevet: **08.04.2015**
(21) Numéro de dépôt: 12711932.9
(22) Date de dépôt: 24.02.2012
(51) Int. Cl.: A01G 17/00

(54) **DISPOSITIF D'ECLAIRCISSAGE D'ARBRE FRUITIER**
VORRICHTUNG ZUM AUSLICHTEN VON BLÜTEN AN OBSTBÄUMEN
DEVICE FOR THINNING FLOWERS OF FRUIT TREES

(30) Priorité: 24.02.2011 FR 1151509
(43) Date de publication de la demande: 01.01.2014
(73) Titulaire: Villanou, Jean-Pierre, 11100 Narbonne (FR)
(72) Inventeur: Villanou, Jean-Pierre, 11100 Narbonne (FR)
(74) Mandataire: Rhein, Alain
(86) Numéro de dépôt international: PCT/FR2012/050386
(87) Numéro de publication internationale: WO 2012/114048

(56) Documents cités:
- DE-A1- 3 818 640
- DE-A1- 4 103 915
- FR-A1- 2 379 245
- FR-A1- 2 853 811

## Description

La présente invention entre dans le domaine agricole, dans la culture des arbres fruitiers.

L'invention concerne plus particulièrement le contrôle de la floribondité d'un arbre fruitier.

Pour ce faire, elle concerne un dispositif d'enlèvement de fleurs d'un arbre fruitier.

Un tel dispositif trouvera une application particulière, mais non limitative, dans l'enlèvement de fleurs d'abricotiers, de pruniers, et de cerisiers.

De manière connue, il convient de diminuer le nombre de fleurs présentes sur un arbre fruitier, en fonction du comportement de l'espèce. C'est d'ailleurs indispensable pour les variétés auto fertiles notamment pour améliorer la qualité, et le calibre des fruits obtenus, mais aussi pour baisser le coût de production. L'éclaircissage sur fleurs peut être réalisé au stade bouton rose, pleine fleur ou à la chute des pétales suivant le pourcentage de fleurs que l'on souhaite enlever.

Actuellement, cette opération consiste à retirer à la main les fleurs, notamment par frottement sur le rameau des doigts protégés par un gant. Cette opération manuelle est longue et fastidieuse, impliquant un coût en main d'oeuvre élevé. On estime ce coût horaire de l'ordre de 100 à 400 heures par hectare d'arbres fruitiers, suivant les variétés et les années. De plus, les branches hautes restent difficiles d'accès.

Il a donc été imaginé des dispositifs pour enlever les fleurs des branches, notamment par arrachage. Il existe une pince pourvue de rouleaux lisses agissant par raclement sur les deux côtés d'un rameau, en symétrie de part et d'autre de ce dernier. Un inconvénient majeur réside dans le fait que les fleurs arrachées restent emprisonnées dans l'étau que forme cette pince, de sorte qu'elles créent un bourrage rendant plus difficile l'opération et enlevant toutes les fleurs suivantes.

De plus, le maintien de la branche lors de cette opération n'est pas assuré. De tels dispositifs ne tiennent pas compte de l'épaisseur décroissante des rameaux. Enfin, l'accès aux branches hautes pose toujours problème.

Il existe aussi des machines motorisées, portative, ou de grande taille cette dernière étant fixée sur un tracteur. Leur principe consiste à motoriser en rotation un axe pourvu de fils souples. Ces fils en rotation viennent alors heurter les fleurs, mais aussi les feuilles, et les rameaux. Les jeunes feuilles, et les brindilles les plus fragiles, sont détruites, ce qui est un inconvénient majeur, et limite leur utilisation avant l'apparition des jeunes pousses. La période annuelle d'utilisation de ces machines est donc limité, et leur utilisation agressive pour l'arbre. De plus, de telles machines nécessitent un entretien onéreux du mécanisme de motorisation.

Un outil à main existant permet de pallier ces inconvénients, sous forme d'un dispositif d'enlèvement de fleurs d'un arbre fruitier par arrachement. Ce dispositif est décrit dans le document FR 2 914 815, déposé par la demanderesse.

Un tel dispositif comprend des moyens de préhension sous forme d'un manche à l'extrémité duquel est placée une anse en forme de U. Ce dispositif se veut à même d'enlever aisément et sans bourrage une partie des fleurs poussant sur une branche.

La forme en U permet un pincement asymétrique de part et d'autre de ladite branche.

Ce dispositif d'enlèvement permet d'arracher les fleurs situées de part et d'autre de la branche, tout en conservant les fleurs sur les côtés, ou inversement.

Cependant sont utilisation est limitée aux rameaux qui ne comportent pas de dards ou d'anticipées, comme c'est le cas sur le pêcher, car ceux-ci bloquent le U de la canne et la rendent difficile à utiliser.

Il est aussi connu du document DE 38 18 640 un dispositif d'enlèvement de fleurs d'un arbre fruitier par arrachement depuis leur branche, se présentant sous forme d'un manche équipé de moyens de préhension à une extrémité et à l'extrémité opposée de moyens d'arrachage desdites fleurs, les moyens d'arrachage étant constitués par au moins une tige fixe pourvue de part et d'autre de poils s'étendant en saillie latéralement.

L'invention a pour but de pallier les inconvénients de la technique, en proposant un dispositif d'enlèvement de fleurs d'un arbre fruitier qui respecte l'ensemble de l'arbre soit, les branches, les rameaux, les brindilles et dards, et les jeunes feuilles, et qui peut s'utiliser sur toutes les espèces.

Un tel dispositif comprend un rouleau muni de poils dont la rigidité permet au rouleau de se mettre en rotation quand on déplace l'axe du rouleau, alors que les poils suffisamment rigides sont en prise avec la végétation. Ce dispositif se veut à même d'enlever aisément les fleurs, tout en respectant l'arbre.

Ces poils forment une brosse plus ou moins dense en fonction du nombre de poils et de leur disposition sur le rouleau. Le diamètre de cette brosse peut être de tout diamètre afin de s'adapter aux différentes espèces fruitières. Préférentiellement, ils peuvent être rigides. Ils peuvent aussi être prévus en matériau semi-rigides, souples ou élastiques et prévus de toute longueur possible.

moyens d'arrachage desdites fleurs comprennent un rouleau muni de poils qui pénètrent dans la végétation, le déplacement de l'axe du rouleau provoque sa rotation. Les poils pénètrent alors dans les branches sans venir les frapper violement, car aucun mécanisme ne fait tourner le rouleau ; de plus sa vitesse est parfaitement proportionnelle à la vitesse de déplacement, car générée par celle-ci.

L'ensemble rouleau arbre, peut être comparé au système pignon crémaillère. Les branches sont la crémaillère, le rouleau le pignon, et les poils représentent les dents du pignon. Les poils pénètrent dans les branches en douceur, comme le font les dents d'un ensemble pignon crémaillère.

Les fleurs étant les éléments les plus fragiles, il suffit d'adapter la vitesse de déplacement du rouleau, la densité des poils, leur longueur ainsi que leur rigidité, en fonction de l'effet escompté.

Le dispositif d'enlèvement selon l'invention permet d'arracher les fleurs sur tout type d'arbre fruitier, peu importe la section ou les ramifications des branches ou rameaux à éclaircir, cela en respectant la végétation.

Ce dispositif peut être manuel, le rouleau est placé au bout d'un manche, et sa rotation est obtenue par les mouvements de l'opérateur.
Il peut aussi avoir des dimensions plus importantes et être automoteur, tracté, ou porté par un engin.

Avantageusement, sa simplicité autorise une fabrication peu coûteuse qui permet de diminuer les coûts d'éclaircissage d'un verger.

En outre, selon un mode de réalisation particulier, le dispositif selon l'invention peut être adapté en plus grandes dimensions pour être tracté par un engin agricole.

Dès lors, chaque fibre comprend des poils ou picots s'étendant sur toute ou partie de la longueur de ladite fibre. De plus, lesdits poils ou picots sont fixes ou montés libres en rotation autour de chaque fibre.

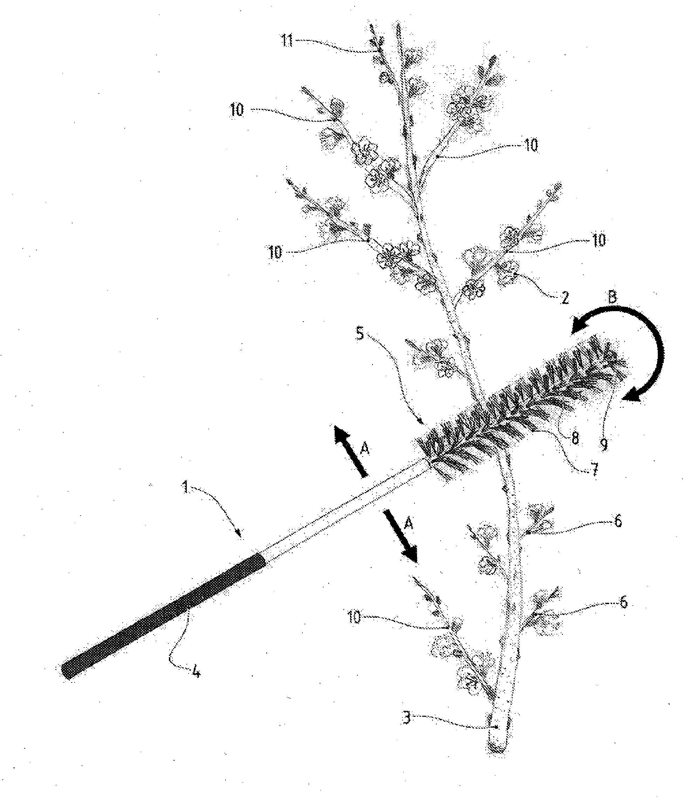

D'autres caractéristiques et avantages de l'invention ressortiront de la description détaillée qui va suivre des modes de réalisation non limitatifs de l'invention, en référence à la figure annexée montrant un mode particulier de réalisation en version manuelle du dispositif selon l'invention au cours de l'opération d'arrachage des fleurs présentes sur une branche comportant des ramifications.

La présente invention concerne un dispositif 1 d'enlèvement de fleurs 2 d'un arbre fruitier par arrachement depuis leur branche 3.

Un tel dispositif 1 se présente sous forme d'une tige longitudinale, telle une perche, et comprend des moyens de préhension sous forme d'un manche 4. Ce dernier peut être recouvert par une poignée ou un revêtement améliorant la préhension par un utilisateur. Cette poignée peut être de toute forme et conformée ergonomiquement pour faciliter la prise en main ainsi que le maniement du dispositif 1.

On notera que la tige peut être prévue de différentes longueurs ou de longueur variable, par exemple au travers de sections télescopiques. DE plus, elle peut être prévue pleine ou creuse, de toute section possible, de préférence ronde.

A l'extrémité opposée du manche 4, est monté sur la tige des moyens d'arrachage 5 se présentant sous la forme d'au moins un rouleau 5, tel un manchon pileux, monté articulé en rotation par rapport au manche. Lesdits moyens d'arrachage 5 sont avantageusement conformés de manière à venir pénétrer les ramifications de ladite branche 3. Plus particulièrement, ils comprennent des poils venant en appui sur la branche 3, et l'ensemble des ramifications 6, 10, 11.
En somme, les moyens d'arrachage 5 sont montés libres en rotation autour de l'axe longitudinal de la tige, comme modélisé par la double flèches montrant les deux directions de rotation B.

Dès lors, un mouvement transversal du dispositif (référencé pour les flèches A sur la figure) des moyens 5 le long de la branche 3 provoque la mise en rotation des moyens 7, freinés par la résistance des poils en appui contre la branche 3, et enlève une partie des fleurs 2 sur toute la périphérie de la branche où lesdits moyens 5 sont en contact. Les tiges des fleurs 2 étant flexibles mais peu résistantes, le simple contact des moyens 7 provoque leur arrachement.

Par contre, les fleurs 2, ayant poussées au niveau de la branche 3 où les moyens 5 ne viennent pas en contact, restent intactes.

En fonction du placement des éléments 5 en appui sur la branche 3, les fleurs 2 peuvent être arrachées au-dessus, au dessous, ou bien sur le dessus et le dessous de la branche 3, suivant le parcours imposé aux moyens 5.

De plus, cet effet de pénétration des éléments 7 permet de provoquer la rotation des moyens 5. La variation de la vitesse du mouvement A, de la profondeur de la pénétration dans le branchage, la densité, la longueur, et la rigidité des moyens d'arrachage 5, permettent d'adapter l'intensité de l'effleurage.

Selon le mode préférentiel de réalisation, lesdits moyens d'arrachage 5 sont constitués par au moins un rouleau 8, muni de fibres 7. Comme évoqué précédemment, les caractéristiques, et l'implantation des éléments 7 permets de ménager des espaces pour l'évacuation des fleurs arrachées, ainsi que d'épargner des fleurs qui resteront sur la branche 3 après le passage du dispositif 1.

Selon un mode de réalisation préférentiel, les fibres 7 sont montées radialement selon des anneaux espacés régulièrement le long desdits moyens 5 ou bien sous forme d'au moins un spirale tournant autour de l'axe desdits moyens 5, telles le pas d'une vis.

Plus particulièrement, ce rouleau 5 peut être garni de fibres de toutes natures et de toutes dimensions, formant ou non un cylindre autour de l'axe longitudinal des moyens d'arrachage 5. Un des côtés 8 de ce rouleau est alors relié en pivotement libre audit manche 4 de façon à permettre sa rotation. L'autre extrémité 9 peut être laissée libre, ou maintenue si les dimensions du rouleau l'imposent.

Les dimensions et le type de garnissage 7 du rouleau 5 peuvent être définis en fonction du type d'arbre fruitier, notamment en fonction de la section de la forme de ses branches 3 ainsi que de la taille des arbres, et du stade de la floraison au moment de l'intervention.

De plus, selon un mode particulier de réalisation, ledit garnissage 7 peut être constitué d'un matériau rigide, souple ou flexible. En somme, l'axe des moyens d'arrachage peut être prévu rigide ou souple.

On notera que le rouleau 5 peut être de toutes dimensions afin de s'adapter au type d'arbre à éclaircir.

Lors de l'éclaircissage, l'utilisateur tient le dispositif 1 par les moyens de préhension 4. Il passe les moyens d'arrachage 5 sur, ou sous la branche 3 choisie puis, par simple mouvement du bras, il met en contact le rouleau 5 sur la branche 3, en faisant pénétrer les fibres 7, dans le branchage. Dans cette position, la mise en mouvement du dispositif 1, en gardant le contact avec la branche 3, provoque la rotation du rouleau 8. Cela engendre l'entrée en contact des fibres 7 avec les fleurs 2, et provoque leur arrachement.
Préférentiellement, les fibres 7 du rouleau 8 viennent poinçonner les fleurs qui sont alors arrachées et tombent au sol.

Le blocage sur un dard 6, une brindille 11, ou un rameau 10, est impossible, car le rouleau 5, roule alors sur l'obstacle avant de revenir au contact de la branche. De plus, le parcours, et la vitesse du rouleau 5 peuvent être facilement contrôlés par l'opérateur, cela évite d'abimer l'ensemble des ramifications, 6, 10, 11, de la branche 3. La gestion de la vitesse, et de la pénétration de 7 permet aussi de s'adapter à la présence des ramifications 6, 10, 11 et à la rigidité de la branche 3 tout au long de cette dernière.

Avantageusement, selon un mode particulier de réalisation, non représenté, à l'extrémité du manche 4 il peut être monté un ensemble de plusieurs rouleaux 5, afin de faciliter le franchissement des obstacles constitués par les ramifications 6, 10, 11.
Plus particulièrement, ils sont montés de façon à permettre leur rotation par rapport au manche 4.
En particulier, les rouleaux peuvent être au nombre de trois, ajustés de façon colinéaire, présentant une forme générale de prisme à base triangulaire. Chacun desdits rouleaux est monté libre en rotation. De plus, l'ensemble des trois rouleaux peut aussi être monté libre en rotation par rapport à la tige du dispositif 1.
Ainsi, lors du déplacement du rouleau de tête, si un blocage survient, qui n'est pas surmonté par la rotation dudit rouleau lui-même, alors l'ensemble des trois rouleaux tourne et un autre rouleau vient prendre la tête du déplacement transversal dudit dispositif.

Un autre mode particulier de réalisation non représenté est constitué d'un ou plusieurs rouleaux d'une taille suffisante et disposés de façon à permettre l'éclaircissage d'un arbre entier.

Un tel dispositif 1 peut être porté manuellement ou tracté par un engin. Le principe reste le même, les poils montées sur le rouleau pénètrent les ramifications de l'arbre, puis le déplacement de l'engin provoque la rotation du rouleau.

Ces poils forment une brosse plus ou moins dense en fonction du nombre de poils et de leur disposition sur le rouleau. Préférentiellement, ils peuvent être rigides. Ils peuvent aussi être prévus en matériau semi-rigides, souples ou élastiques et prévus de toute longueur et de toute épaisseur possibles.

Une telle brosse facilite l'utilisation du dispositif 1 sur des branches 3 pourvues des ramifications 6, 10, 11, comme c'est le cas de l'abricotier. Cette brosse permet de ne pas blesser le rameau, voire les jeunes fruits si l'intervention d'éclaircissage est réalisée à ce stade.

Comme évoqué précédemment, un tel dispositif peut être prévu tracté et monté sur un engin agricole. Ce dispositif présente alors de plus grandes dimensions. Les moyens de préhension se retrouvent alors être les moyens de fixation avec ledit engin. Selon un premier mode de réalisation, chaque brin d'une telle brosse peut lui-même recevoir sur sa longueur des poils ou picots, à l'instar de la brosse manuelle. Ces poils peuvent être rigides, semi-rigides ou souples.
De plus, ils peuvent être montés fixes mais aussi libres en rotation. En somme, chaque brin de cette grande brosse est constitué par une brosse manuelle identique à celle précédemment décrite. Dès lors, outre la rotation de cette grande brosse lors de l'avancée de l'engin, chaque brin peut tourner sur lui-même au contact des branches, assurant l'arrachement des fleurs.

On notera que dans le cas de fibres 7 rigides ou semi-rigides, l'arrachement des fleurs peut s'effectuer par poinçonnage. En effet, les fibres 7 viennent alors transpercer les fleurs qui, ainsi accrochées, restent prisonnières de la brosse et sont arrachées de leur branche.

L'invention facilite grandement l'éclaircissage d'arbre fruitier au travers d'un dispositif 1 simple et peu coûteux. Facile et rapide d'utilisation, il économise un grand nombre d'heures de main d'oeuvre et permet d'enlever 30 à 70% des fleurs. De plus, il peut être utilisé durant une période plus longue, n'ayant aucune restriction quand au stade de développement des fleurs à arracher, et à la présence éventuelle de jeunes pousses.

De plus, un tel dispositif 1 s'affranchit de moyens de motorisation des moyens d'arrachage. La rotation est naturelle, non excessive comme sur les dispositifs existants tournant à des vitesses préjudiciables qui arrachent sans distinction et meurtrissent l'arbre. Au contraire, l'invention est dépourvue de motorisation des moyens d'arrachage 5, tournant à la vitesse d'avancement du dispositif et, surtout, en fonction de la résistance dans les branchages, ne risquant ainsi pas d'endommager les branches et l'arbre. En fait, le rouleau 5 roule naturellement sur la végétation qui constitue sa bande de roulement. Ce principe évite les frottements et les dommages qu'ils causent à l'arbre.

## Revendications

1. Dispositif (1) d'enlèvement de fleurs (2) d'un arbre fruitier par arrachement depuis leur branche (3), se présentant sous la forme d'une tige et comprenant des moyens de préhension sous forme d'un manche (4) à l'extrémité duquel sont montés des moyens d'arrachage (5) desdites fleurs (2), lesdits moyens d'arrachage (5) étant constitués par au moins un rouleau pourvus de fibres (7) sous forme de poils, **caractérisé par le fait que** chaque rouleau est monté articulé libre en rotation à l'extrémité de ladite tige, de sorte que le déplacement transversal de ladite tige au contact de la branche induise une rotation de chaque rouleau.

2. Dispositif (1) selon la revendication 1, **caractérisé par le fait que** lesdits moyens d'arrachage (5) sont constitués par un ensemble de trois rouleaux, ledit ensemble étant monté libre en rotation par rapport à ladite tige.

3. Dispositif (1) selon l'une quelconque des revendications précédentes, **caractérisé par le fait que** lesdits poils sont rigides, semi-rigides et/ou souples.

4. Dispositif (1) selon l'une quelconque des revendications précédentes, **caractérisé par le fait que** lesdits poils s'étendent sur toute ou partie de la longueur de chaque rouleau.

5. Dispositif (1) selon l'une quelconque des revendications précédentes, **caractérisé par le fait que** lesdits moyens d'arrachage (5) sont flexibles ou rigides.

6. Dispositif (1) selon l'une quelconque des revendications précédentes, **caractérisé par le fait que** chaque fibre (7) comprend des poils ou picots s'étendant sur toute ou partie de la longueur de ladite fibre (7).

7. Dispositif (1) selon la revendication 6, **caractérisé par le fait que** lesdits poils ou picots sont fixes ou montés libres en rotation autour de chaque fibre.

## Patentansprüche

1. Vorrichtung (1) zum Entfernen von Blüten (2) von einem Obstbaum durch Abreißen von ihrem Zweig (3), die in der Form einer Stange ausgestaltet ist und Greifmittel in der Form eines Griffes (4) umfasst, an dessen Ende Mittel zum Abreißen (5) der besagten Blüten (2) gelagert sind, wobei die Abreißmittel (5) aus wenigstens einer Rolle bestehen, die mit Fasern (7) in der Form von Borsten versehen ist, **dadurch gekennzeichnet, daß** jede Rolle an dem Ende der Stange frei drehbar angelenkt ist, so daß die Querverschiebung der besagten Stange in Berührung mit dem Zweig eine Drehung jeder Rolle induziert.

2. Vorrichtung (1) nach Anspruch 1, **dadurch gekennzeichnet, daß** die Abreißmittel (5) aus einem Satz von drei Rollen besteht, wobei der besagte Satz frei drehbar bezüglich der besagten Stange gelagert ist.

3. Vorrichtung (1) nach einem der vorhergehenden Ansprüche, **dadurch gekennzeichnet**; dass die Borsten starr, halbstarr und/oder flexibel sind. i

4. Vorrichtung (1) nach einem der vorhergehenden Ansprüche, **dadurch gekennzeichnet, dass** sich die besagten Borsten über die ganze oder einen Teil der Länge jeder Rolle erstrecken.

5. Vorrichtung (1) nach einem der vorhergehenden Ansprüche, **dadurch gekennzeichnet, daß** die besagten Abreißmittel (5) flexibel oder starr sind.

6. Vorrichtung (1) nach einem der vorhergehenden Ansprüche, **dadurch gekennzeichnet, daß** jede Faser (7) Borsten oder Widerhaken umfasst, die sich über die ganze oder einen Teil der Länge der besagten Faser (7) erstrecken.

7. Vorrichtung (1) nach Anspruch 6, **dadurch gekennzeichnet, daß** die besagten Borsten oder Widerhaken fest oder um jede Faser herum frei drehbar montiert sind.

## Claims

1. Device (1) for removing blossoms (2) from a fruit tree by tearing off from their branch (3), which is in the form of a rod and comprises gripping means in the form of a handle (4) at the end of which are mounted means for tearing-off (5) said blossoms (2), said tearing-off means (5) being formed of at least one roller provided with fibers (7) in the form of bristles, wherein each roller is mounted articulated so as to freely rotate at the end of said rod, so that the transverse displacement of said rod into contact with the branch induces a rotation of each roller.

2. Device (1) according to claim 1, wherein said tearing-off means (5) are formed of a set of three rollers, said assembly being mounted so as to freely rotate with respect to said rod.

3. Device (1) according to any one of the preceding claims, wherein said bristles are rigid, semi-rigid and/or flexible.

4. Device (1) according to any one of the preceding claims, wherein said bristles extend over the whole or part of the length of each roller.

5. Device (1) according to any one of the preceding claims, wherein said tearing-off means (5) are flexible or rigid.

6. Device (1) according to any one of the preceding claims, wherein each fiber (7) comprises bristles or barbs extending over the whole or part of the length of said fiber (7).

7. Device (1) according to claim 6, wherein said bristles or barbs are fixed or mounted so as to freely rotate about each fiber.
